# FASCICULE DE BREVET EUROPEEN

(11) **EP 2 709 783 B1**
(45) Date de publication et mention de la délivrance du brevet: **15.11.2017**
(21) Numéro de dépôt: 12728667.2
(22) Date de dépôt: 11.05.2012
(51) Int. Cl.: B22F 3/00, B22F 3/15, C22C 47/06, C22C 49/14, F01D 5/02, B23K 13/04, B23P 15/00

(54) **PROCEDE DE FABRICATION PAR SOUDAGE DIFFUSION D'UNE PIECE MONOBLOC POUR UNE TURBOMACHINE**
VERFAHREN ZUR HERSTELLUNG EINES MONOBLOCK TEIL FÜR EINE STRÖMUNGSMASCHINE DURCH DIFFUSIONSSCHWEISSEN
PROCESS FOR MANUFACTURING A MONOBLOCK PART FOR A TURBOMACHINE BY DIFFUSION WELDING

(30) Priorité: 18.05.2011 FR 1154326
(43) Date de publication de la demande: 26.03.2014
(73) Titulaire: SNECMA, 75015 Paris (FR)
(72) Inventeur: GODON, Thierry, F-77550 Moissy Cramayel Cedex (FR); DAMBRINE, Bruno, Jacques, Gérard, F-77550 Moissy Cramayel Cedex (FR)
(74) Mandataire: Pichat, Thierry
(86) Numéro de dépôt international: PCT/FR2012/051058
(87) Numéro de publication internationale: WO 2012/156632

(56) Documents cités:
- EP-A1- 1 099 774
- US-A- 5 440 806

## Description

La présente invention concerne un procédé de fabrication par soudage diffusion d'une pièce monobloc pour une turbomachine telle qu'un turboréacteur ou un turbopropulseur d'avion, cette pièce étant par exemple un arbre de transmission de puissance entre l'arbre principal d'un turboréacteur et un boîtier à engrenages d'entraînement des machines ou équipements accessoires du moteur (appelé couramment arbre AGB dans le domaine, AGB étant l'acronyme de *Accessory Gear Box*).

L'arbre AGB est relativement fin et long, avec une longueur de l'ordre du mètre pour les moteurs de grand diamètre, et est en général réalisé en deux parties disposées bout à bout pour des raisons de tenue mécanique et aux vibrations. Les extrémités adjacentes de ces deux parties sont guidées et centrées en rotation par un palier intermédiaire assurant le passage des modes propres de fréquences vibratoires.

On a déjà proposé de fabriquer cet arbre d'une seule pièce par soudage diffusion. Ce procédé consiste à former une ébauche de l'arbre autour d'un mandrin cylindrique tournant par enroulement sur le mandrin d'au moins un fil métallique provenant d'une bobine ou d'un dévidoir, de façon à former plusieurs couches annulaires coaxiales et superposées de fils métalliques qui entourent le mandrin et qui sont chacune formées de plusieurs spires jointives, puis à soumettre l'ébauche à un traitement de soudage diffusion par compression isostatique à chaud (CIC, de l'anglais *Hot Isostatic Pressing - HIP*) dans un outillage approprié. La pièce obtenue est monobloc et peut subir un usinage de finition si nécessaire.

Il est également connu de renforcer ce type de pièce par des fibres céramiques enduites de métal et enroulées en une ou plusieurs couches sur le mandrin entre deux couches, respectivement interne et externe, de fils métalliques.

Les demandes antérieures FR 11/50194, FR 11/51706 et FR 11/52129 de la demanderesse décrivent des procédés du type précité.

Il est également divulgué dans la demande EP 1099774 A1, une méthode pour produire un élément de matériel composite comprenant une matrice métallique et une structure de renforcement.

Cependant, les procédés de la technique antérieure ne permettent pas de fabriquer des pièces à section non circulaire car il est difficile voire impossible d'enrouler un fil métallique autour d'un mandrin de forme non cylindrique.

L'invention a notamment pour but d'apporter une solution simple, efficace et économique à ce problème.

Elle propose à cet effet un procédé de fabrication par soudage diffusion d'une pièce monobloc pour une turbomachine, comprenant les étapes consistant à :
- réaliser autour d'un mandrin une ébauche de la pièce comprenant plusieurs couches annulaires coaxiales et superposées de fils métalliques, chaque couche de fils métalliques de l'ébauche étant formée d'anneaux que l'on a engagés sur le mandrin,
- soumettre l'ébauche à un traitement de soudage diffusion par compression isostatique à chaud pour obtenir une pièce monobloc,
- et usiner éventuellement cette pièce,
caractérisé en ce que les anneaux de chaque couche sont indépendants les uns des autres, de telle sorte qu'ils sont engagés les uns à la suite des autres et empilés individuellement sur le mandrin.

Selon l'invention, les fils métalliques forment des anneaux indépendants qui ne proviennent pas directement d'une bobine ou d'un dévidoir et ne sont pas enroulés sur le mandrin, ce qui permet de réaliser des pièces à section circulaire ou non circulaire. L'empilement des anneaux sur le mandrin peut se faire à température ambiante.

Les pièces à section circulaire sont réalisées à partir d'anneaux de forme circulaire qui sont engagés sur un mandrin cylindrique. Les pièces à section non circulaire (et par exemple polygonale : triangulaire, rectangulaire, carrée, etc.) sont réalisées à partir d'anneaux de forme non circulaire correspondante qui sont engagés sur un mandrin de forme complémentaire (non cylindrique).

Les anneaux sont engagés sur le mandrin en étant positionnés à une extrémité du mandrin, coaxialement à celui-ci, puis en étant déplaçés en translation sur le mandrin, parallèlement à son axe longitudinal. Lorsque le mandrin est orienté verticalement, les anneaux d'une même couche sont empilés les uns sur les autres. Lorsque le mandrin est orienté horizontalement, les anneaux d'une même couche sont disposés horizontalement les uns à côté des autres.

La compression peut se faire sous presse isotherme ou dans un sac à l'autoclave, en fonction du nombre de pièces à produire.

Selon une autre caractéristique de l'invention, les anneaux sont préformés avant leur engagement sur le mandrin pour adopter la forme circulaire ou non circulaire précitée. Le préformage des anneaux leur permet de prendre n'importe quelle forme correspondant à la section de la pièce à réaliser. A titre d'exemple, dans le cas où un arbre à section polygonale doit être réalisé, les anneaux d'une couche interne ont une forme polygonale et les anneaux d'une couche externe ont une même forme polygonale avec une dimension transversale supérieure à celle des anneaux de la couche interne. Le préformage des anneaux peut être réalisé manuellement (pour les fils métalliques de faible diamètre) ou au moyen d'un outillage approprié.

Le diamètre du fil métallique des anneaux est par exemple compris entre 1 et 6mm environ. Le mandrin a un rayon qui est de préférence supérieur au diamètre du fil métallique des anneaux.

Les anneaux peuvent être fermés ou non fendus. Dans ce cas, les diamètres interne et externe de ces anneaux sont fixes et chaque anneau d'une couche externe s'étend autour d'un anneau d'une couche interne et est aligné transversalement avec cet anneau de la couche interne. Le diamètre externe d'un anneau d'une couche interne est égal au diamètre interne d'un anneau de la couche externe entourant la couche interne. Les anneaux fermés peuvent être obtenus directement par leur procédé de fabrication. En variante, ils peuvent être obtenus par conformation d'un fil métallique dont les extrémités libres sont rapprochées et fixées l'une à l'autre, par exemple par soudage.

Quand on considère quatre anneaux adjacents répartis sur deux couches, à savoir une couche interne formée de deux anneaux et une couche externe formée de deux anneaux entourant les deux anneaux de la couche interne, l'empilement de ces anneaux (de même diamètre) est du type carré. En effet, une demi vue en coupe transversale de ces anneaux comprend quatre cercles dont les centres sont situés aux quatre coins d'un carré. Dans un exemple particulier de réalisation de l'invention, le foisonnement de cet empilement est de l'ordre de 21,5%.

En variante, les anneaux sont du type ouvert ou fendu en un point de leur circonférence. Dans ce cas, ces anneaux sont déformables par écartement ou par rapprochement de leurs extrémités libres. Ceci permet de faire varier les diamètres interne et externe des anneaux et d'autoriser un montage des anneaux sur le mandrin dans lequel chaque anneau d'une couche externe s'étend entre deux anneaux d'une couche interne. Le diamètre externe d'un anneau d'une couche interne est alors supérieur au diamètre interne d'un anneau de la couche externe entourant la couche interne. L'empilement de ces anneaux (de même diamètre) est du type triangle équilatéral, une demi vue en coupe transversale de ces anneaux comprenant trois cercles dont les centres sont situés aux coins d'un triangle équilatéral. Dans un exemple particulier de réalisation de l'invention, le foisonnement de cet empilement est de l'ordre de 9,31%.

L'ouverture de chaque anneau fendu engagé sur le mandrin est de préférence décalée angulairement par rapport à celles des anneaux adjacents, autour de l'axe longitudinal du mandrin. Ceci permet de répartir ces ouvertures autour de l'axe longitudinal du mandrin, sur toute la dimension axiale du mandrin et d'éviter de créer des zones dans l'ébauche où la quantité de métal apportée par les fils serait insuffisante et générerait des vides dans la pièce à réaliser.

La pièce à réaliser est par exemple un arbre ou un disque ou anneau aubagé monobloc (DAM ou ANAM) de turbomachine.

Avantageusement, au moins une couche annulaire de fibres céramiques enduites de métal, formée par exemple d'un tissu ou d'une nappe de fibres, est disposée entre deux couches de fils métalliques.

Cette couche de fibres permet de renforcer la pièce. Chaque fibre comprend une âme en matériau céramique (tel qu'en carbure de silicium Sic) recouverte d'une enduction (par EGV ou autre) en métal (Ti, Al, B, etc.), ce métal étant de préférence le même que celui des anneaux précités. La pièce comprend ainsi, après soudage diffusion, une matrice métallique homogène qui assure une fonction de liant pour la pièce et de protection des fibres qui reprennent les efforts auxquels est soumise la pièce. Cette solution permet d'augmenter la raideur de la pièce sans augmenter sa masse volumique. Elle permet également d'augmenter le rapport module d'Young sur masse volumique de la pièce et de remonter les modes propres de fréquences vibratoires. Dans le cas d'un arbre AGB, elle permet de supprimer le palier intermédiaire précité qui n'est plus nécessaire. D'autres matériaux tels que des tissus en SiC, des feuillards en Ti, en Al, ou en TiAl ou tout matériau présentant des propriétés permettant un formage superplastique et un soudage diffusion peuvent être enroulés ou empilés autour du mandrin.

L'invention sera mieux comprise et d'autres caractéristiques, détails et avantages de l'invention apparaîtront à la lecture de la description suivante faite à titre d'exemple non limitatif en référence aux dessins annexés dans lesquels :
- la figure 1 est une vue schématique en coupe axiale d'un mandrin sur lequel est formée une ébauche par empilement d'anneaux métalliques et illustre une étape du procédé selon l'invention ;
- la figure 2 est une vue schématique d'un anneau métallique selon l'invention, du type fermé ou non fendu;
- la figure 3 est une vue schématique d'une variante de réalisation d'un anneau métallique selon l'invention, du type ouvert ou fendu;

- la figure 4 est une vue schématique en coupe axiale d'anneaux fermés empilés et la figure 5 est une vue schématique en coupe axiale d'anneaux fendus empilés ;
- la figures 6 représente schématiquement le motif de répétition d'un empilement carré tel que représenté en figure 4 et la figure 7 représente schématiquement le motif de répétition d'un empilement triangle équilatéral tel que représenté en figure 5 ;
- la figure 8 est une vue schématique en coupe axiale d'un mandrin sur lequel sont empilés des anneaux métalliques selon une autre étape du procédé selon l'invention ;
- la figure 9 est une demi-vue schématique en coupe axiale d'un outillage de mise en oeuvre du soudage diffusion de la pièce et illustre une autre étape du procédé selon l'invention ; et
- les figures 10 à 12 représentent des anneaux non circulaires selon des variantes de réalisation du procédé selon l'invention.

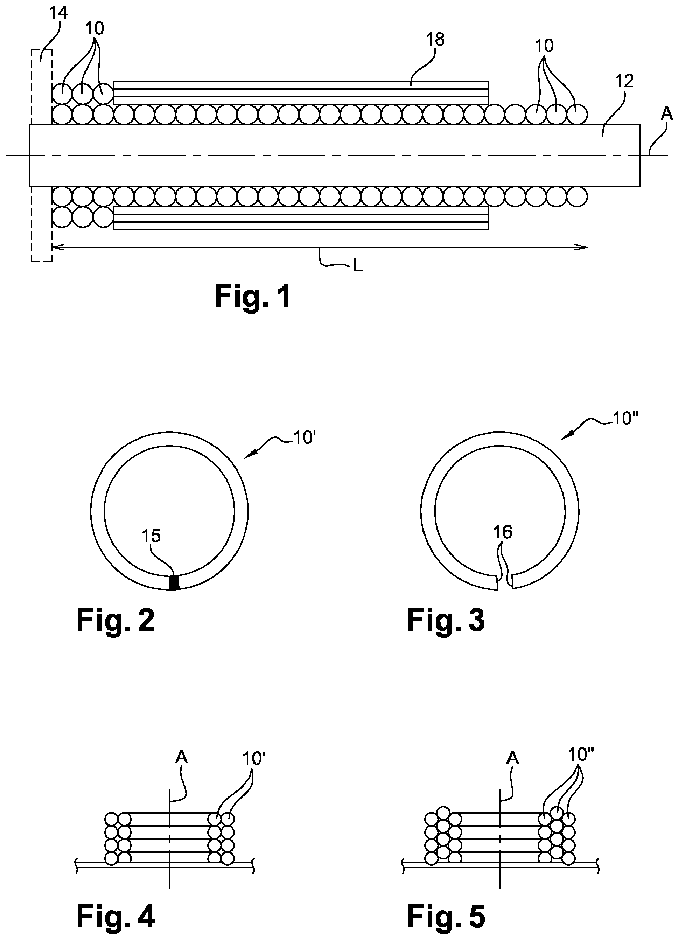

Des étapes du procédé selon l'invention sont schématiquement représentées aux figures 1, 8 et 9, ce procédé permettant de fabriquer une pièce monobloc pour une turbomachine, telle qu'un arbre ou un disque ou anneau aubagé monobloc.

Dans une première étape représentée en figure 1, des anneaux métalliques 10 sont engagés sur un mandrin 12 et empilés sur une distance L prédéterminée de façon à former une ou plusieurs couches annulaires coaxiales et superposées d'anneaux métalliques autour du mandrin. Les anneaux 10 d'une même couche ont le même diamètre et sont disposés les uns à côté des autres le long de l'axe longitudinal A du mandrin, l'épaisseur de cette couche étant égale au diamètre du fil métallique formant les anneaux.

Le mandrin 12 a une forme cylindrique dans l'exemple représenté mais pourrait avoir une autre forme en section, par exemple triangulaire, carrée, rectangulaire, ou polygonale, comme cela sera décrit plus en détail dans ce qui suit. Ce mandrin est disposé verticalement ou horizontalement et peut être fixe.

Les anneaux 10 sont engagés sur le mandrin 12 en étant positionnés à une extrémité du mandrin, coaxialement à celui-ci, et déplacés en translation sur le mandrin, parallèlement à l'axe A. Un flasque annulaire 14 est de préférence monté sur le mandrin à une extrémité de celui-ci et forme des moyens d'appui du premier anneau de chaque couche annulaire s'étendant autour du mandrin. Les anneaux 10 sont empilés sur une distance L qui est déterminée en fonction de la longueur de la pièce à fabriquer. Le nombre d'anneaux par couche est fonction du diamètre du fil métallique qui est par exemple compris entre 1 et 6mm environ.

Les anneaux peuvent être réalisés dans un alliage de titane de type TiA6V ou Ti6242 assurant résistance thermomécanique et légèreté.

Dans une étape préliminaire non représentée du procédé selon l'invention, les anneaux 10 sont conformés de façon à prendre une forme correspondant à la forme de la pièce à fabriquer, qui peut être à section circulaire, carrée, rectangulaire, triangulaire, etc. Cette étape de préformage peut être réalisée à partir d'un fil métallique provenant d'une bobine ou d'un dévidoir.

Les anneaux 10', 10" sont du type fermé ou non fendu comme représenté en figure 2, ou du type ouvert ou fendu comme représenté en figure 3. Dans ces deux exemples de réalisation de l'invention, les anneaux sont circulaires et sont destinés à être montés sur un mandrin cylindrique.

Les anneaux fermés 10' ont des diamètre interne et externe fixes. Dans le cas où ils sont obtenus par préformage d'un fil métallique, les extrémités libres 15 en regard de chaque anneau 10' sont rapprochées et fixées l'une à l'autre, par exemple par soudage.

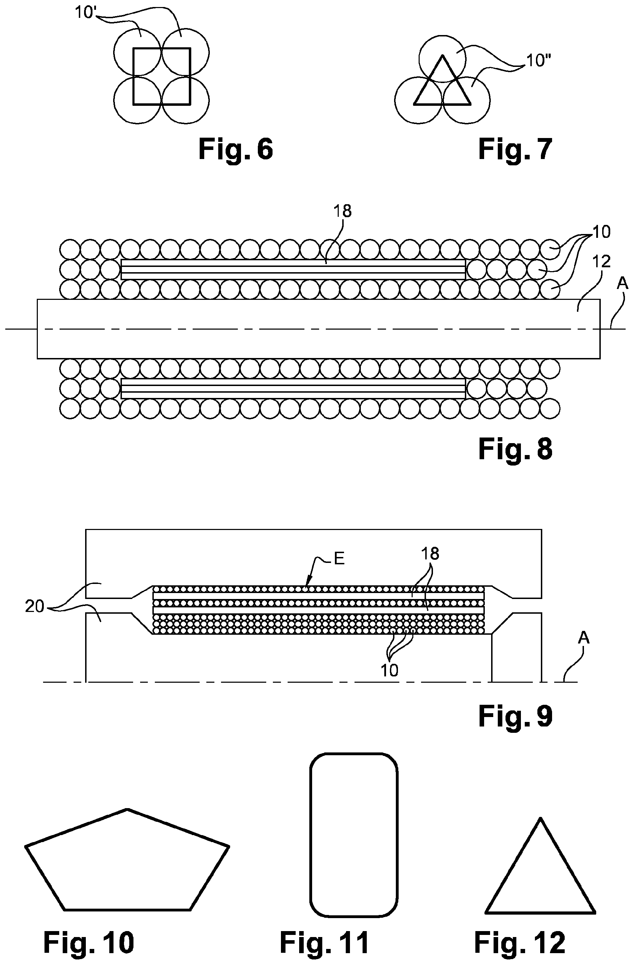

Les figures 4 et 6 représentent le type d'empilement (carré) obtenu avec des anneaux fermés 10'. Le diamètre interne des anneaux de la couche interne est sensiblement égal ou légèrement supérieur au diamètre externe du mandrin 12, et le diamètre externe de ces anneaux est sensiblement égal ou légèrement inférieur au diamètre interne des anneaux de la couche externe (figure 4). Chaque anneau d'une couche interne est entouré par un anneau d'une couche externe, ces deux anneaux étant situés dans un même plan transversal par rapport à l'axe A. La figure 6 représente les demi-sections transversales de quatre anneaux adjacents répartis sur deux couches, une couche interne formée de deux anneaux et une couche externe formée de deux anneaux entourant les deux anneaux de la couche interne. L'empilement est du type carré car les centres des demi sections (en forme de cercle) des fils sont situés aux quatre coins d'un carré. Dans un exemple particulier de réalisation de l'invention, le foisonnement de cet empilement est de l'ordre de 21,5%.

Les diamètres des anneaux fendus 10" peuvent être modifiés par écartement ou rapprochement de leurs extrémités libres 16 (figure 3). Les figures 5 et 7 représentent le type d'empilement (triangle équilatéral) obtenu avec des anneaux ouverts 10". Le diamètre interne des anneaux de la couche interne est sensiblement égal ou légèrement supérieur au diamètre externe du mandrin 12, et le diamètre externe de ces anneaux est supérieur au diamètre interne des anneaux de la couche externe, ce qui force les anneaux de la couche externe à adopter une position dans laquelle ils sont situés entre deux anneaux de la couche interne, à l'extérieur de ceux-ci (figure 5). Chaque anneau de la couche externe est situé dans un plan transversal passant sensiblement au milieu de deux plans transversaux passant respectivement par les deux anneaux adjacents de la couche interne. La figure 7 représente les demi-sections transversales de trois anneaux adjacents répartis sur deux couches, une couche interne formée de deux anneaux et un anneau externe situé à l'extérieur et entre les anneaux de la couche interne. L'empilement est du type triangle équilatéral car les centres des sections (en forme de cercle) des fils sont situés aux coins d'un triangle équilatéral. Dans un exemple particulier de réalisation de l'invention, le foisonnement de cet empilement est de l'ordre de 9,31 %.

De préférence, les anneaux 10" sont empilés sur le mandrin de sorte que leurs ouvertures soient décalées angulairement les unes par rapport aux autres autour de l'axe A. Ces ouvertures peuvent ainsi être réparties de manière régulière ou non autour de l'axe A, ce qui permet d'éviter la création de zones où le métal ferait défaut et où des vides pourraient apparaître lors de la phase de compression.

Comme représenté en figure 1, la couche interne d'anneaux métalliques 10 est entourée par une structure fibreuse composite qui peut être constituée d'un tissu ou d'une nappe de fibres céramiques 18 enduites de métal.

Le métal d'enduction des fibres 18 et le métal des anneaux métalliques 10 sont de préférence de nature identique (en TiA6V ou en 6242 par exemple) pour optimiser l'étape ultérieure du procédé relative à l'opération de compression isostatique à chaud et de soudage diffusion.

Le tissu ou la nappe de fibres 18 est enroulé sur la première couche d'anneaux métalliques 10 de façon à ce que les fibres s'étendent parallèlement à l'axe A du mandrin 12. Un enroulement de plusieurs tissus ou nappes peut être prévu à partir du même tissu, ou à partir d'un ou de plusieurs autres tissus distincts enroulés coaxialement. Les tissus peuvent être de différentes espèces et de différents diamètres de fibres enduites. La longueur de la structure fibreuse composite est inférieure ou égale à la longueur L de la première couche d'anneaux métalliques 10.

En variante, les fibres 18 peuvent être enroulées autour du mandrin et s'étendre circonférentiellement autour de l'axe A.

A titre d'exemples, les fibres céramiques enduites peuvent être en SiC/Ti, en SiC/Al, SiC/B, etc.

Une étape suivante du procédé selon l'invention représentée en figure 8 consiste à recouvrir la structure fibreuse précitée d'au moins une autre couche d'anneaux métalliques 10, ces anneaux métalliques étant empilés autour du mandrin 12 comme indiqué dans ce qui précède. Des anneaux métalliques 10 sont en outre disposés en avant et en arrière de la structure fibreuse pour que celle-ci soit noyée dans le métal de la pièce finale à réaliser.

Une ébauche E de la pièce a ainsi été progressivement formée autour du mandrin. Cette ébauche E peut comprendre plus d'un millier d'anneaux 10 et plusieurs structures fibreuses du type précité, ces structures fibreuses étant séparées les unes des autres par au moins une couche d'anneaux métalliques.

L'ébauche E est ensuite soumise à un traitement de compression isostatique à chaud (CIC ou HIP) sous une presse isotherme ou bien dans un sac à l'autoclave (le choix dépendant notamment du nombre de pièces à produire). On met en place l'ébauche dans un outillage 20 approprié (figure 9) et une forte compression est exercée sur l'ébauche sous une température élevée appropriée, de façon que le métal des anneaux et de l'enrobage des fibres se ramollisse et flue en remplissant tous les espaces vides entre les anneaux des différentes couches jusqu'à la liaison des différents éléments par soudage diffusion.

Dans une variante non représentée, l'ébauche est placée dans une poche déformable en acier doux laquelle est ensuite introduite dans un autoclave. Cet autoclave est porté à une pression isostatique de 1000 bars et une température de 940°C (pour le TiA6V), de sorte que la totalité de la poche se déforme en se rétractant par évacuation de l'air et applique sur l'ébauche une pression uniforme jusqu'au fluage du métal avec liaison par soudage diffusion.

Avantageusement, plusieurs poches peuvent être introduites dans l'autoclave pour réaliser simultanément plusieurs pièces en réduisant les coûts de fabrication.

Le procédé selon l'invention permet de réaliser des pièces à section de forme non circulaire, et par exemple à section de forme pentagonale (figure 10), rectangulaire (figure 11) ou triangulaire (figure 12). L'étape de préformage du procédé selon l'invention consiste alors à préformer les anneaux pour leur donner une forme du type désiré, ces anneaux étant engagés et empilés sur un mandrin à section de forme complémentaire. Par exemple, des anneaux de forme rectangulaire sont engagés sur un mandrin parallélépipédique de section rectangulaire, pour la réalisation d'une pièce monobloc de section rectangulaire telle que celle représentée en figure 11. Ces anneaux peuvent être du type fermé ou non fendu ainsi que de type ouvert ou fendu.

## Revendications

1. Procédé de fabrication par soudage diffusion d'une pièce monobloc pour une turbomachine, comprenant les étapes consistant à :
- réaliser autour d'un mandrin (12) une ébauche (E) de la pièce comprenant plusieurs couches annulaires coaxiales et superposées de fils métalliques, chaque couche de fils métalliques de l'ébauche étant formée d'anneaux (10,10',10") que l'on a engagés sur le mandrin,
- soumettre l'ébauche à un traitement de soudage diffusion par compression isostatique à chaud pour obtenir une pièce monobloc,
- et usiner éventuellement cette pièce,
**caractérisé en ce que** les anneaux (10,10',10") de chaque couche sont indépendants les uns des autres, de telle sorte qu'ils sont engagés les uns à la suite des autres et empilés individuellement sur le mandrin.

2. Procédé selon la revendication 1, **caractérisé en ce que** les anneaux (10) ont une forme circulaire ou non-circulaire, et par exemple polygonale.

3. Procédé selon la revendication 2, **caractérisé en ce que** les anneaux (10) sont préformés avec une forme circulaire ou non circulaire avant leur engagement sur le mandrin (12).

4. Procédé selon l'une des revendications précédentes, **caractérisé en ce que** le mandrin (12) a une forme cylindrique ou non cylindrique.

5. Procédé selon l'une des revendications précédentes, **caractérisé en ce que** les anneaux (10) sont du type fermé ou non fendu.

6. Procédé selon l'une des revendications précédentes, **caractérisé en ce que** les anneaux (10) sont du type ouvert ou fendu en un point de leur circonférence.

7. Procédé selon la revendication 6, **caractérisé en ce que** l'ouverture de chaque anneau (10) engagé sur le mandrin (12) est décalée angulairement par rapport à celles des anneaux adjacents, autour de l'axe longitudinal du mandrin.

8. Procédé selon l'une des revendications précédentes, **caractérisé en ce que** la pièce est un arbre ou un disque ou anneau aubagé monobloc de turbomachine.

9. Procédé selon l'une des revendications précédentes, **caractérisé en ce qu'**au moins une couche annulaire de fibres céramiques enduites de métal, par exemple sous forme d'un tissu ou d'une nappe de fibres (18), est disposée entre deux couches de fils métalliques sur le mandrin.

10. Procédé selon l'une des revendications précédentes, **caractérisé en ce que** les anneaux (10) sont engagés sur le mandrin (12) en étant positionnés à une extrémité du mandrin, coaxialement à celui-ci, et déplacés en translation sur le mandrin, parallèlement à son axe longitudinal (A).

## Patentansprüche

1. Verfahren zum Herstellen eines einstückigen Bauteils für eine Turbomaschine durch Diffusionsschweißen, umfassend die nachfolgenden Schritte:
- Ausbilden eines Rohlings (E) des Bauteils um einen Dorn (12) herum, welcher Dorn mehrere koaxial verlaufende, übereinanderliegende, ringförmige Schichten aus Metalldrähten aufweist, wobei jede aus Metalldrähten Schicht des Rohlings aus Ringen (10, 10', 10") gebildet ist, die auf den Dorn aufgeschoben wurden,
- Diffusionsschweißen des Rohlings durch heißisostatisches Pressen, um ein einstückiges Bauteil zu erhalten,
- und gegebenenfalls spanendes Bearbeiten dieses Bauteils,
**dadurch gekennzeichnet, dass** die Ringe (10, 10', 10") einer jeden Schicht voneinander unabhängig sind, so dass sie einzeln nacheinander auf den Dorn aufgeschoben und gestapelt werden.

2. Verfahren nach Anspruch 1, **dadurch gekennzeichnet, dass** die Ringe (10) eine kreisrunde bzw. nicht kreisrunde, beispielsweise polygonale, Form haben.

3. Verfahren nach Anspruch 2, **dadurch gekennzeichnet, dass** die Ringe (10) vor deren Aufschieben auf den Dorn (12) mit einer kreisrunden bzw. nicht kreisrunden Form vorgeformt sind.

4. Verfahren nach einem der vorangehenden Ansprüche, **dadurch gekennzeichnet, dass** der Dorn (12) eine zylindrische bzw. nicht zylindrische Form hat.

5. Verfahren nach einem der vorangehenden Ansprüche, **dadurch gekennzeichnet, dass** die Ringe (10) geschlossen bzw. nicht gespalten ausgeführt sind.

6. Verfahren nach einem der vorangehenden Ansprüche, **dadurch gekennzeichnet, dass** die Ringe (10) an einem Punkt ihres Umfangs offen bzw. gespalten ausgeführt sind.

7. Verfahren nach Anspruch 6, **dadurch gekennzeichnet, dass** die Öffnung eines jeden auf den Dorn (12) aufgeschobenen Rings (10) um die Längsachse des Dorns herum im Winkel zu denen der angrenzenden Ringe versetzt ist.

8. Verfahren nach einem der vorangehenden Ansprüche, **dadurch gekennzeichnet, dass** das Bauteil eine einstückig ausgeführte Welle bzw. Scheibe bzw. ein einstückig ausgeführter Schaufelring für Turbomaschinen ist.

9. Verfahren nach einem der vorangehenden Ansprüche, **dadurch gekennzeichnet, dass** zumindest eine ringförmige Schicht aus mit Metall überzogenen Keramikfasern, beispielsweise in Form eines Gewebes oder eines Vlieses aus Fasern (18), zwischen zwei Schichten aus Metalldrähten am Dorn angeordnet wird.

10. Verfahren nach einem der vorangehenden Ansprüche, **dadurch gekennzeichnet, dass** die Ringe (10) auf den Dorn (12) aufgeschoben werden, indem sie an einem Ende des Dorns koaxial zu diesem positioniert und auf dem Dorn parallel zu dessen Längsachse (A) translatorisch verlagert werden.

## Claims

1. A method for fabricating a single-piece part for a turbine engine by diffusion bonding, the method comprising the steps consisting in:
• making a blank (E) around a mandrel (12), the blank comprising a plurality of coaxial and superposed annular layers of metal wires, each layer of metal wires of the blank being formed by rings (10, 10', 10") which are engaged on the mandrel;
• subjecting the blank to a hot isostatic pressing diffusion bonding treatment in order to obtain a single-piece part; and
• optionally machining the part;
the method being characterized the rings (10, 10', 10") of each layer are independent one from another, so that they are engaged and stacked individually on the mandrel.

2. A method according to claim 1, **characterized in that** the rings (10) are of a circular or a non-circular shape, and for example of polygonal shape.

3. A method according to claim 2, **characterized in that** the rings (10) are pre-formed with a shape that is circular or non-circular prior to being engaged on the mandrel (12).

4. A method according to any preceding claim, **characterized in that** the mandrel (12) is of a cylindrical or a non-cylindrical shape.

5. A method according to any preceding claim, **characterized in that** the rings (10) are of a closed, or non-split, type.

6. A method according to any preceding claim, **characterized in that** the rings (10) are of a type that is open or split at a point around its circumference.

7. A method according to claim 6, **characterized in that** the opening of each ring (10) engaged on the mandrel (12) is angularly offset relative to the openings of adjacent rings around the longitudinal axis of the mandrel.

8. A method according to any preceding claim, **characterized in that** the single-piece part is a single-piece shaft, or a disk, or a bladed ring of a turbine engine.

9. A method according to any preceding claim, **characterized in that** at least one annular layer of metal-coated ceramic fibers, e.g. in a form of a fabric or a sheet of fibers (18), is arranged between two metal wire layers on the mandrel.

10. A method according to any preceding claim, **characterized in that** the rings (10) are engaged on the mandrel (12) by being positioned at an end of the mandrel, coaxially to the mandrel, and by being moved in translation along the mandrel, parallel to the longitudinal axis (A).
